# DEMANDE DE BREVET EUROPEEN

(11) **EP 2 071 990 A1**
(43) Date de publication de la demande: **24.06.2009**
(21) Numéro de dépôt: 08356156.3
(22) Date de dépôt: 16.12.2008
(51) Int. Cl.: A47J 43/07, A47J 36/10

(54) **Récipient de travail pour appareil électroménager de préparation culinaire et appareil muni d'un tel récipient**

(30) Priorité: 19.12.2007 FR 0708864
(71) Demandeur: SEB S.A., 69130 Ecully (FR)
(72) Inventeur: Deschamps, Joël, 53100 Mayenne (FR); Jouatel, Alexis, 53100 Mayenne (FR); Chapron, Maryvonne, 53600 Evron (FR)
(74) Mandataire: Kiehl, Hubert

(57) **Abrégé**

Récipient de travail (2), destiné à équiper un appareil électroménager de préparation culinaire de type blender, comprenant une enveloppe (21) ouverte à son extrémité supérieure et une poignée (23) de préhension s'étendant latéralement à ladite enveloppe (21), ledit récipient comportant un couvercle (4) de fermeture amovible comprenant une languette de déverrouillage (44) venant au dessus de la poignée (23) lorsque le couvercle (4) est immobilisé sur le récipient (2), **caractérisé en ce que** le couvercle (4) peut être immobilisé sur le récipient (2) par des moyens de verrouillage élastique comportant au moins un élément de verrouillage (43) porté par le couvercle venant s'engager élastiquement derrière un élément de blocage (24) porté par la surface extérieure de l'enveloppe (21) du récipient.

## Description

La présente invention se rapporte au domaine technique général des appareils électroménagers de préparation culinaire comportant un récipient de travail renfermant un outil rotatif destiné à être entraîné en rotation par un boîtier moteur et se rapporte plus particulièrement à un récipient de travail comportant un couvercle de fermeture amovible.

Il est connu, de la demande de brevet WO 2006/124246, un appareil de préparation culinaire de type blender comportant un récipient de travail comportant un couvercle de fermeture amovible qui est immobilisé sur le récipient par deux poignées s'étendant à 180° l'une de l'autre, les deux poignées comportant des éléments de verrouillage venant s'engager élastiquement sur le bord du récipient. Un tel couvercle présente l'avantage de pouvoir être facilement verrouillé sur le récipient.

Cependant, ce couvercle présente l'inconvénient de nécessiter l'emploi des deux mains pour pouvoir être extrait du récipient, l'utilisateur devant saisir les deux poignées et les écarter l'une de l'autre pour pouvoir désengager les éléments de verrouillage.

Aussi, un but de la présente invention est de remédier à cet inconvénient en proposant un récipient muni d'un couvercle de fermeture, immobilisé sur le couvercle par des moyens de verrouillage élastique, qui puissent être aisément déverrouillés du récipient, notamment au moyen d'une seule main.

A cet effet, l'invention se rapporte à un récipient de travail, destiné à équiper un appareil électroménager de préparation culinaire de type blender, comprenant une enveloppe ouverte à son extrémité supérieure et une poignée de préhension s'étendant latéralement à l'enveloppe, le récipient comportant un couvercle de fermeture amovible qui peut être immobilisé sur le récipient par des moyens de verrouillage élastique, caractérisé en ce que le couvercle comporte une languette de déverrouillage venant au dessus de la poignée lorsque le couvercle est immobilisé sur le récipient.

Selon une autre caractéristique de l'invention, la languette de déverrouillage s'étend à proximité d'un bras de liaison de la poignée lorsque le couvercle est mis en place sur le récipient.

Selon une autre caractéristique de l'invention, le bras de liaison de la poignée présente, au dessous de la zone couverte par la languette de déverrouillage, une section transversale en forme de U ouverte à son extrémité supérieure.

Selon une autre caractéristique de l'invention, les moyens de verrouillage élastique comportent au moins un élément de verrouillage porté par le couvercle venant s'engager élastiquement derrière un élément de blocage porté par la surface extérieure de l'enveloppe du récipient.

Selon encore une autre caractéristique de l'invention, les éléments de verrouillage sont supportés par deux oreilles portées par le couvercle, les deux oreilles s'étendant à 90° de la languette de déverrouillage.

L'invention concerne également un appareil électroménager de préparation culinaire comportant un boîtier moteur et un récipient de travail comprenant un outil rotatif entraîné en rotation par le boîtier moteur, le récipient étant fermé par un couvercle amovible, caractérisé en ce que le récipient est conforme au récipient selon l'invention précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil blender comportant un récipient selon un mode particulier de réalisation de l'invention,
- la figure 2 est une vue en perspective du récipient de la figure 1 avec le couvercle désaccouplé du récipient,
- la figure 3 est une vue en coupe transversale du récipient de la figure 1,
- la figure 4 est une vue en perspective, de dessous, du couvercle de fermeture du récipient,
- les figures 5 et 6 sont des vues en perspective du récipient muni de son couvercle avec la position de la main lorsque l'utilisateur souhaite respectivement soulever le couvercle ou sécuriser le couvercle.

Seuls les éléments nécessaires à la compréhension de l'invention ont été représentés. Pour faciliter la lecture des dessins les mêmes éléments portent les mêmes références d'une figure à l'autre.

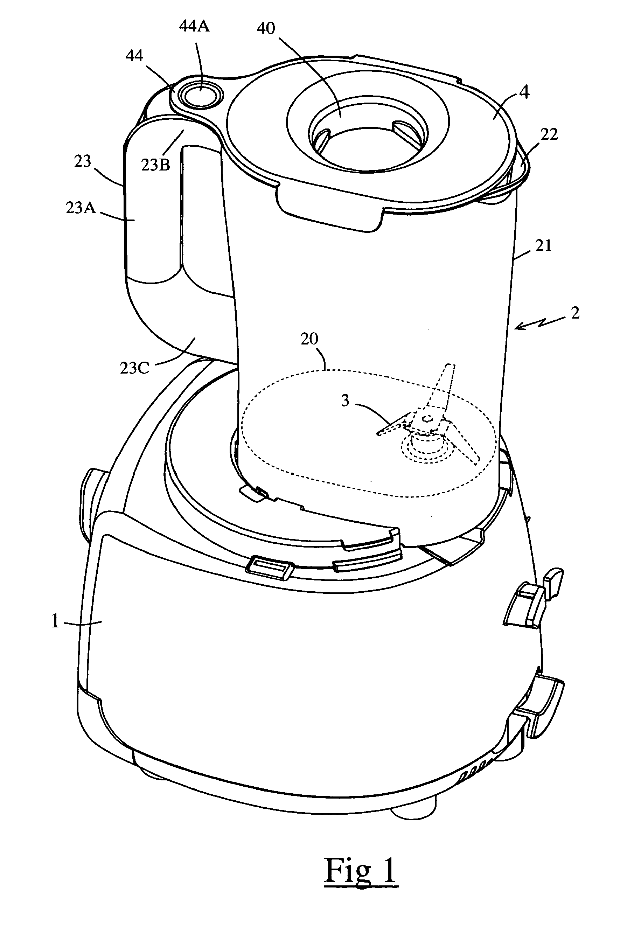

La figure 1 illustre un appareil de préparation culinaire comportant un boîtier moteur 1 supportant un récipient de travail 2 amovible. Le récipient 2 comporte un fond 20 recevant un outil rotatif 3, représentés en pointillé sur la figure 1, entraîné en rotation par le boîtier moteur 1. Le récipient 2 comprend une enveloppe 21 s'étendant au dessus du fond 20 du récipient et présentant avantageusement une section transversale de forme oblongue, le récipient 2 présentant une extrémité supérieure ouverte comprenant un bord muni d'un bec verseur 22.

Le récipient 2 comporte une poignée 23 disposée dans l'axe longitudinal du récipient, à l'opposé du bec verseur 22, cette poignée 23 comprenant une zone de préhension 23A reliée à l'enveloppe 21 du récipient par un bras de liaison supérieur 23B et un bras de liaison inférieur 23C.

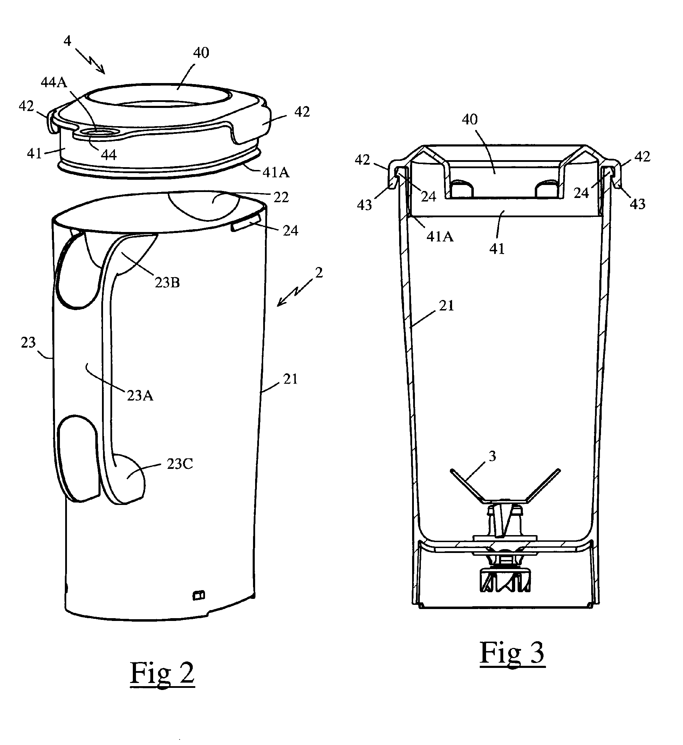

Conformément à la figure 2, la zone de préhension 23A de la poignée présente, en coupe transversale, une partie arrière en forme de U servant de zone d'appui des doigts de la main et une partie avant fermée par une paroi faiblement convexe, servant de zone d'appui de la paume de la main.

Le récipient 2 est fermé par un couvercle 4 amovible présentant une forme oblongue complémentaire à celle de l'enveloppe 21 du récipient, le couvercle 4 comportant avantageusement une ouverture centrale 40 permettant l'introduction d'aliments dans le récipient 2 en cours de fonctionnement de l'appareil, cette ouverture 40 pouvant recevoir un capuchon, non représenté sur les figures. A titre d'exemple, le couvercle s'étend sur une longueur de l'ordre de 14 cm et sur une largeur de l'ordre de 10 cm, l'ouverture centrale 40 présentant un diamètre de l'ordre de 5 cm.

Conformément aux figures 2 à 4, le couvercle 4 comporte une jupe d'étanchéité 41 s'insérant dans le récipient 2 et comportant une lèvre 41 A venant au contact de la paroi intérieure de l'enveloppe 21 du récipient afin d'assurer l'étanchéité de la liaison entre le couvercle 4 et le récipient 2.

Le couvercle 4 est immobilisé sur le récipient 2 au moyen de deux oreilles 42, disposées latéralement en vis-à-vis de part et d'autre du centre du couvercle, les oreilles 42 s'étendant à l'extérieur de l'enveloppe 21 du récipient sur une hauteur de l'ordre de 15 mm et présentant une épaisseur de l'ordre de 3 mm. Le oreilles 42 comporte des griffes 43 venant s'engager élastiquement derrière des élément de blocage 24 portés par la surface extérieure de l'enveloppe 21, à proximité du bord supérieur du récipient 2.

A titre d'exemple, les griffes 43 et les éléments de blocages 24 comportent une face inclinée par rapport à la direction axiale d'engagement du couvercle 4 sur le récipient 2, ces faces inclinées venant en contact l'une de l'autre et générant une force tendant à déformer élastiquement les oreilles 42 afin de permettre le basculement de la griffe 43 par dessus l'élément de blocage 24. Les griffes 43 et les éléments de blocage 24 comportent également une face perpendiculaire à la direction axiale d'introduction du couvercle 4 s'étendant sur une hauteur de l'ordre de 1,5 mm, ces faces venant en contact l'une de l'autre, une fois la griffe 43 passée par-dessus l'élément de blocage 24, pour assurer l'immobilisation du couvercle 4.

De manière avantageuse, le couvercle 4 est réalisé par moulage en matériau plastique, tel que du polypropylène.

Plus particulièrement selon l'invention, le couvercle 4 comporte une languette de déverrouillage 44 s'étendant latéralement au couvercle 4 et venant au dessus de la poignée 23 lorsque le couvercle 4 est engagé sur le récipient 2.

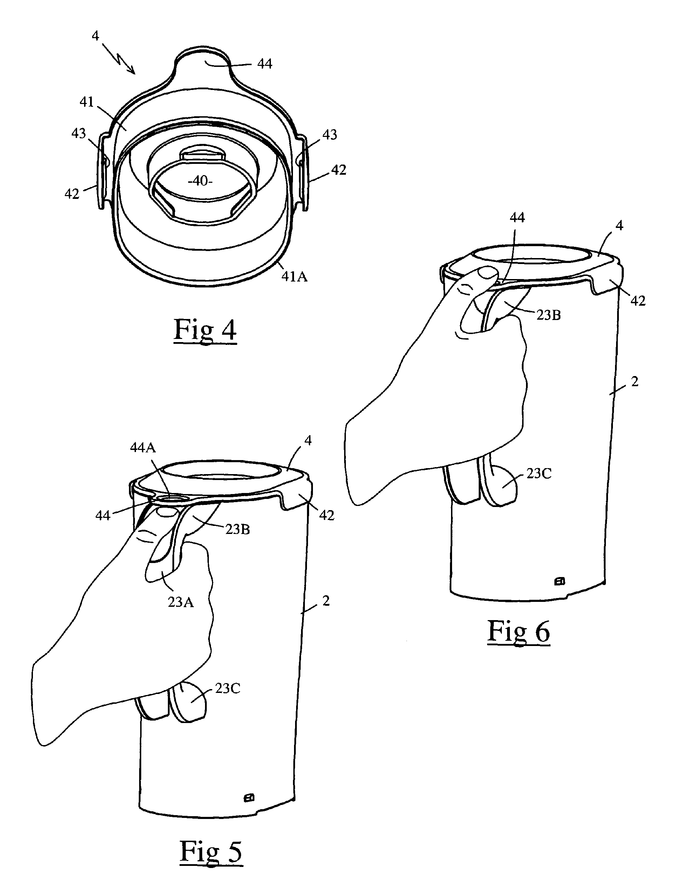

Cette languette de déverrouillage 44 forme une excroissance sensiblement circulaire, d'un diamètre de l'ordre de 30 mm, s'étendant dans le plan de fermeture du couvercle 4, la languette 44 vient reposer sur le bord supérieur du bras de liaison supérieur 23B de la poignée de préhension, ce dernier venant dans le prolongement du bord supérieur du récipient 2. De manière préférentielle, le bras de liaison supérieur 23B présente une section transversale en forme de U semblable à celle de la partie arrière de la zone de préhension 23A de la poignée, le bras de liaison supérieur 23B étant ouvert vers le haut et vers l'avant de la poignée 23 afin de permettre l'introduction du pouce de la main sous la languette de déverrouillage 44 ainsi que cela est illustré sur la figure 5.

Ainsi, lorsque l'utilisateur souhaite déverrouiller le couvercle 4 du récipient 2, il lui suffit d'introduire le pouce sous la languette de déverrouillage 44 et de soulever cette dernière de manière à générer un effort assurant un couple de basculement sur le couvercle 4 provoquant le désengagement des griffes 43 des éléments de blocage 24 par déformation élastique des oreilles 42. Un tel couvercle 4 présente donc l'avantage de pouvoir être aisément déverrouillé du récipient 2.

A l'inverse, lorsque l'utilisateur souhaite transporter le récipient 2, il peut sécuriser la bonne tenue du couvercle 4 et assurer une parfaite étanchéité de ce dernier en plaçant le pouce sur la languette de déverrouillage 44, ainsi que cela est illustré sur la figure 6, de manière à exercée une force tendant à appliquer le couvercle 4 contre le récipient 2. De manière avantageuse, la face supérieure de la languette 44 comporte un renfoncement 44A définissant une zone pour le positionnement de l'extrémité du pouce de la main.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, la poignée de préhension du récipient pourra ne pas comporter de bras de liaison inférieur.

Dans une autre variante de réalisation, le bras de liaison supérieur de la poignée pourra être plus éloigné du bord supérieur du récipient de manière à laisser plus d'espace sous la languette de déverrouillage, le bras de liaison supérieur pouvant alors être fermé dans sa partie supérieure.

## Revendications

1. Récipient de travail (2), destiné à équiper un appareil électroménager de préparation culinaire de type blender, comprenant une enveloppe (21) ouverte à son extrémité supérieure et une poignée (23) de préhension s'étendant latéralement à ladite enveloppe (21), ledit récipient comportant un couvercle (4) de fermeture amovible comprenant une languette de déverrouillage (44) venant au dessus de la poignée (23) lorsque le couvercle (4) est immobilisé sur le récipient (2), **caractérisé en ce que** le couvercle (4) peut être immobilisé sur le récipient (2) par des moyens de verrouillage élastique comportant au moins un élément de verrouillage (43) porté par le couvercle venant s'engager élastiquement derrière un élément de blocage (24) porté par la surface extérieure de l'enveloppe (21) du récipient.

2. Récipient selon la revendication 1, **caractérisé en ce que** ladite languette de déverrouillage (44) s'étend à proximité d'un bras de liaison (23B) de la poignée (23) lorsque le couvercle (4) est mis en place sur le récipient (2).

3. Récipient selon la revendication 2, **caractérisé en ce que** ledit bras de liaison (23B) de la poignée présente, au dessous de la zone couverte par la languette de déverrouillage (44), une section transversale en forme de U ouverte à son extrémité supérieure.

4. Récipient selon l'une quelconque des revendications 1 à 3, **caractérisé en ce que** lesdits éléments de verrouillage (43) sont supportés par deux oreilles (42) portées par le couvercle (4), les deux oreilles (42) s'étendant à 90° de la languette de déverrouillage (44).

5. Appareil électroménager de préparation culinaire comportant un boîtier moteur (1) et un récipient de travail (2) comprenant un outil rotatif (3) entraîné en rotation par ledit boîtier moteur (1), ledit récipient (2) étant fermé par un couvercle (4) amovible, **caractérisé en ce que** ledit récipient (2) est conforme à l'une des revendications 1 à 4.
